# EUROPEAN PATENT APPLICATION

(11) **EP 4 604 408 A1**
(43) Date of publication of application: **20.08.2025**
(21) Application number: 25153376.6
(22) Date of filing: 22.01.2025
(51) Int. Cl.: H04B 7/02, H04L 5/00

(54) **ON UPLINK BASED SWITCH OF INDICATED TCI STATE IN UNIFIED TCI FRAMEWORK**

(30) Priority: 16.02.2024 GB 202402155
(71) Applicant: Nokia Technologies Oy, 02610 Espoo (FI)
(72) Inventor: HAKOLA, Sami-Jukka, 90540 Oulu (FI); KOSKELA, Timo, 90670 Oulu (FI); KARJALAINEN, Juha Pekka, 88600 Sotkamo (FI)
(74) Representative: Berggren Oy

(57) **Abstract**

The present invention relates to a method and respective apparatus (as UE (710)) for performing the steps of transmitting (707) Sounding Reference Signal(s), SRS(s), from a User Equipment, UE, to a base station (720); receiving (708) in the UE from the base station Sounding Reference Signal Indicator(s), SRI(s), or an indication to apply downlink reference signal(s), DL RS(s), in Downlink Control Information, DCI, wherein the SRI(s) or the indication to apply DL RS(s) indicate a newly indicated Transmission Configuration Indication, TCI, state for subsequent UL transmissions, or subsequent DL transmissions, or subsequent both UL and DL transmissions; transmitting (709) from the UE to the base station a Physical Uplink Shared Channel, PUSCH, on the newly indicated TCI state indicated in the DCI; defining (711) an application time in the UE for the newly indicated TCI state, which application time is configured to start with the first PUSCH transmission indicated by the DCI comprising the newly indicated TCI state; and applying (714) in the UE the newly indicated TCI state for subsequent UL, or DL, or both UL and DL transmissions based on the indicated SRI or the indicated DL RS(s).

## Description

### TECHNICAL FIELD

The present invention is related to User Equipment -assisted beam management, and 6G physical layer design in a broader sense. Particularly, it is related to unified/UL TCI (Uplink Transmission Configuration Indication) state configuration based on SRS (Sounding Reference Signal). In other words, the invention relates to switching of indicated TCI States in uplink scheduling.

### BACKGROUND

Beam Management defines a set of functionalities to assist a user equipment (UE) to set its reception and transmission (RX/TX) beams for downlink receptions and uplink transmissions, respectively. In 3GPP New Radio (NR), the beam management for both downlink and uplink is network controlled, including triggering of the beam reports from the UE.

A new carrier frequency range for 7-20 GHz is planned to be introduced in the next generation (6G) networks. The operation of the new carrier frequency range can be considered as a mix of Frequency Range 1 (0-6 GHz) and Frequency Range 2 (24-71 GHz). Due to possible usage of new bands, larger antenna arrays may be needed to cope with additional pathlosses and penetration losses compared to operation below 6 GHz band. New bands may also enable larger bandwidths to be used compared to New Radio, NR. To enable efficient utilization of larger bandwidths and large antenna arrays, analog or hybrid digital-analog beamforming architectures may be viable options for UE implementation for new bands. When UEs are operating with antenna arrays and analog beamforming, combined beam management procedures for the gNB and UE beam alignment are required.

In the current 5G standardization, only Downlink Control Information (DCI) formats 1_1 and 1_2 can be used for selecting new indicated Transmission Configuration Indication (TCI) states. Moreover, in the unified TCI framework, the UE must follow the current TCI state(s) instead of a Sounding Reference Signal Indicator (SRI). This limits the performance in the UL transmission since UL DCIs are not considered to determine new indicated TCI states.

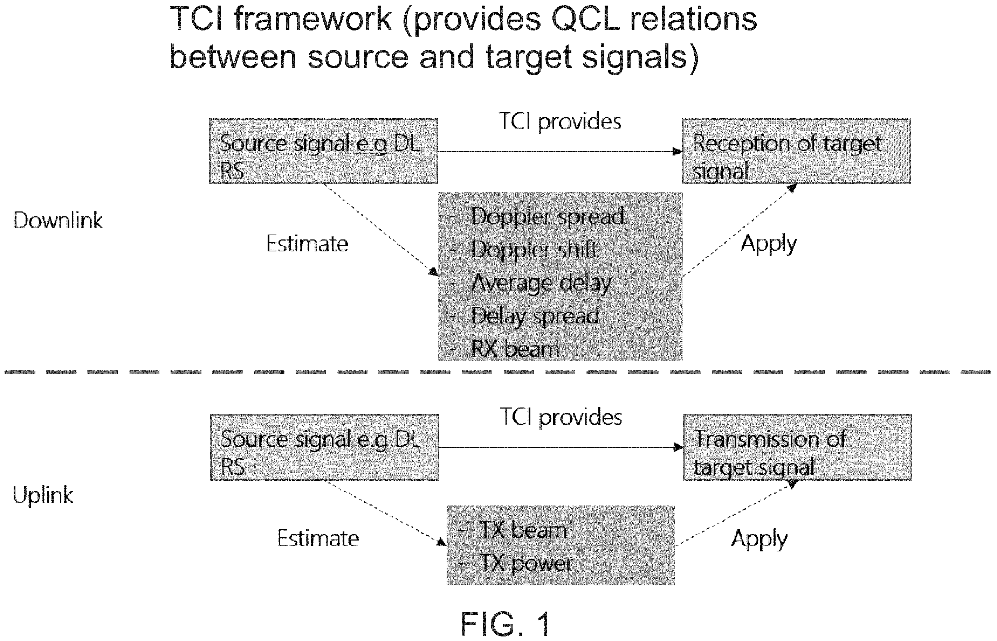

Unified TCI framework was defined in Rel17 (for single-TRP; transmission point) and in Rel18 (for multi-TRP) to provide a UE with quasi co-location (QCL) source reference signal(s) based on which the UE can receive signals and channels in downlink and transmit signals and channels in uplink. This principle is shown in **FIG. 1****.**

FIG. 1 illustrates the TCI framework, and it provides QCL relations between source signals and target signals. In other words, FIG. 1 illustrates the TCI framework for downlink and uplink to provide UE parameters to receive downlink signals and channels, and to transmit uplink signals and channels, respectively.

The TCI state is "a container" or "a storage" that comprises one or more source reference signal(s). The UE measures the reference signal(s) and it estimates the parameters as presented in the following paragraphs.

If the reference signal is QCL-TypeA, the UE estimates doppler spread, doppler shift, average delay, and delay spread. If one of the given RS (reference signals) in the TCI state to receive downlink is QCL-TypeA RS, the UE can apply corresponding estimated parameters for the reception of the downlink signal or channel.

If the reference signal is QCL-TypeB, the UE estimates doppler spread, doppler shift, average delay, and delay spread. If one of the given RS in the TCI state to receive downlink is QCL-TypeB RS, the UE can apply corresponding estimated parameters for the reception of the downlink signal or channel.

If the reference signal is QCL-TypeC, the UE estimates doppler spread, doppler shift, average delay, and delay spread. If one of the given RS in the TCI state to receive downlink is QCL-TypeC RS, the UE can apply corresponding estimated parameters for the reception of the downlink signal or channel.

If the reference signal is QCL-TypeD, the UE estimates a spatial RX parameter. If one of the given RS in the TCI state to receive downlink is QCL-TypeD RS, the UE can apply corresponding estimated parameters for the reception of the downlink signal or channel.

If the reference signal is QCL-TypeD, the UE estimates a spatial RX parameter. If one of the given RS in the TCI state to transmit uplink is QCL-TypeD RS, the UE can apply corresponding estimated parameters to transmit an uplink signal or channel. Based on the RS, the UE determines an uplink transmit spatial filter and/or transmit power control setting.

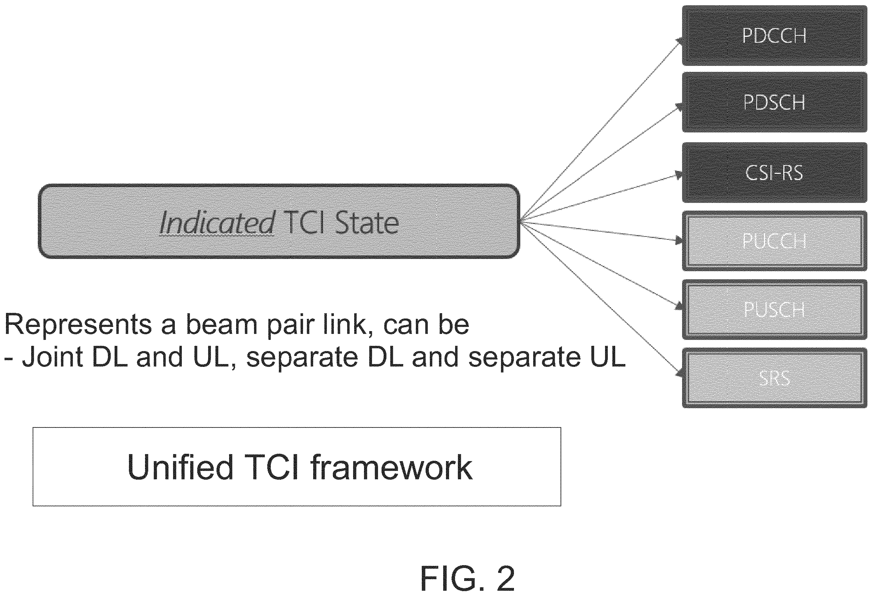

The principle of the TCI indication for different signals and channels is according to **FIG. 2** where an indicated TCI state is used to provide QCL source signal for downlink and uplink signals.

FIG. 2 illustrates an indicated TCI state for downlink and uplink signals and channels.

As FIG. 2 shows, the downlink signals and channels comprise PDCCH (Physical Downlink Control Channel), PDSCH (Physical Downlink Shared Channel) and CSI-RS (Channel State Information Reference Signal). The uplink signals and channels comprise PUCCH (Physical Uplink Control Channel), PUSCH (Physical Uplink Shared Channel) and SRS (Sounding Reference Signal).

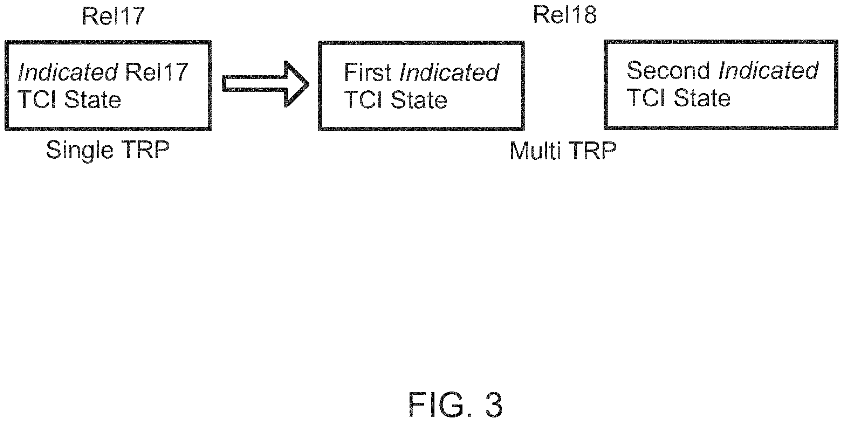

In Rel17, the UE can have one indicated TCI state for DL and UL at a time, while in Rel18 there can be two to support a multi-TRP scenario. **FIG. 3** illustrates this concept.

In other words, FIG. 3 illustrates an extension in Rel18 to have two indicated TCI states for DL and UL.

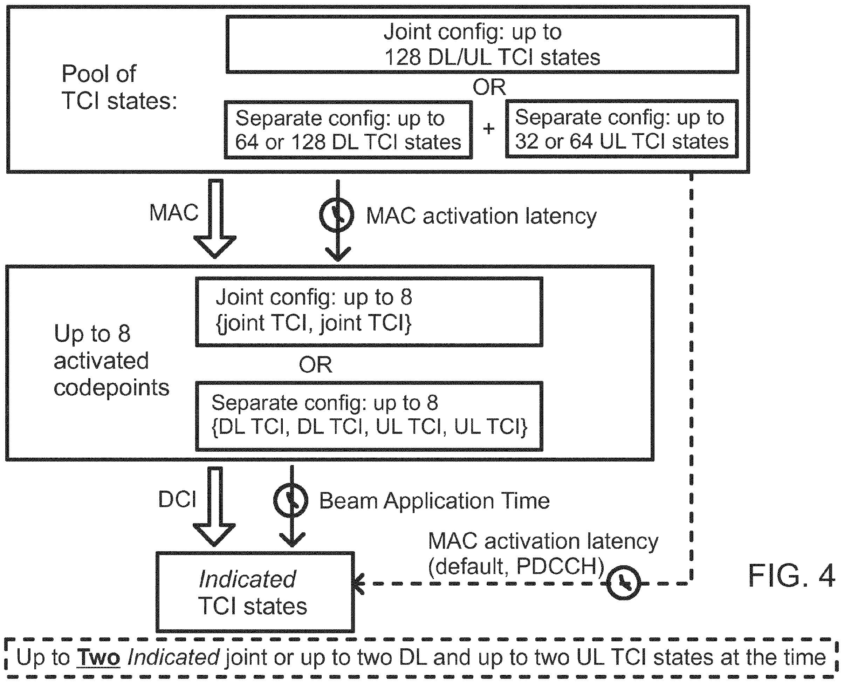

TCI states are configured in Radio Resource Controller (RRC). MAC (Medium Access Control) constructs up to 8 TCI codepoints, where each codepoint may have up to two DL and up to two UL TCI states. The DCI on PDCCH is used to select one TCI codepoint comprising indicated TCI states. For MAC activation and DCI (Downlink Control Information) selection, there are corresponding application procedures (UE feedback) and application times. The principle is presented in **FIG. 4****.** In other words, FIG. 4 illustrates configuration, activation and indication steps for the TCI states.

In the 5G, there is a following defect or problem.

In the 5G specifications and in Rel17 and Rel18, only DL DCI formats 1_1 and 1_2 can be used to select new indicated TCI states. Moreover, in the unified TCI framework, the UE must follow the current TCI state(s) instead of the SRI. This is a drawback because this limits the performance in the UL transmission since UL DCIs are not considered to determine new indicated TCI states.

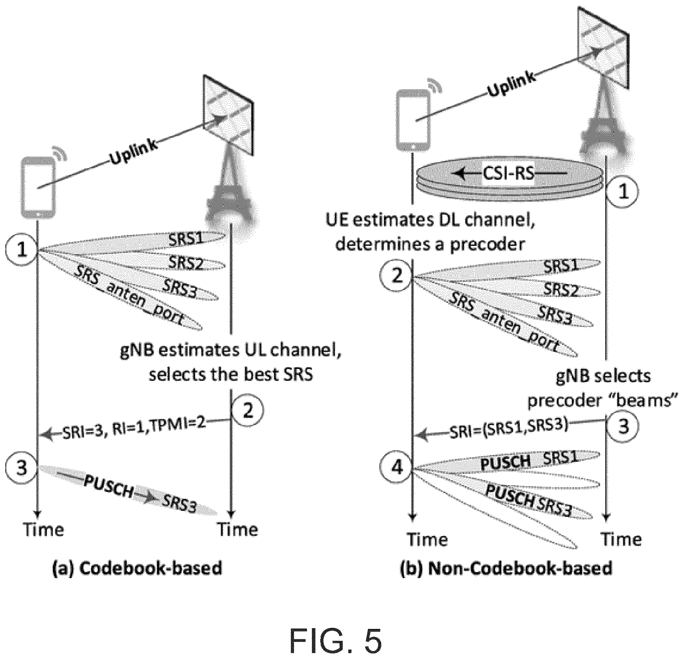

In 5G NR, UL PUSCH (when not considering the fallback mode) can be codebook or non-codebook based, where the UL CSI acquisition and transmission parameter estimation at gNB (i.e. the base station) is based on SRS transmissions as shown in **FIG. 5****.** In codebook-based UL transmission, the gNB estimates the UL channel from SRS transmissions of the UE, selects the best SRS resource and determines a precoder that the gNB signals (i.e. informs) to the UE to be used in the PUSCH transmission. In non-codebook -based UL, the UE determines a precoder for the SRS transmissions based on a certain downlink reference signal.

Hence, FIG. 5 illustrates codebook (a) and non-codebook-based (b) UL transmissions.

When scheduling the UL PUSCH transmission, the gNB provides an SRI (Sounding Reference Signal Indicator) pointing to the specific SRS resource transmission that the UE shall transmit PUSCH the same as the indicated SRS. However, in the unified TCI (Transmission Configuration Indication) framework, the UE follows (a) current indicated TCI state(s) instead of the indicated SRS.

"RI" means Rank Indicator, and "TPMI" means Transmit Precoding Matrix Indicator in FIG. 5a.

The technical problem to be solved is that in 5G NR, a typical configuration in TDD (Time Division Duplex) deployments is downlink heavy, e.g. "DDDFU" or "DDDDDDDFUU", where D stands for a downlink slot, F stands for a flexible slot having both downlink and uplink symbols, and U stands for an uplink slot.

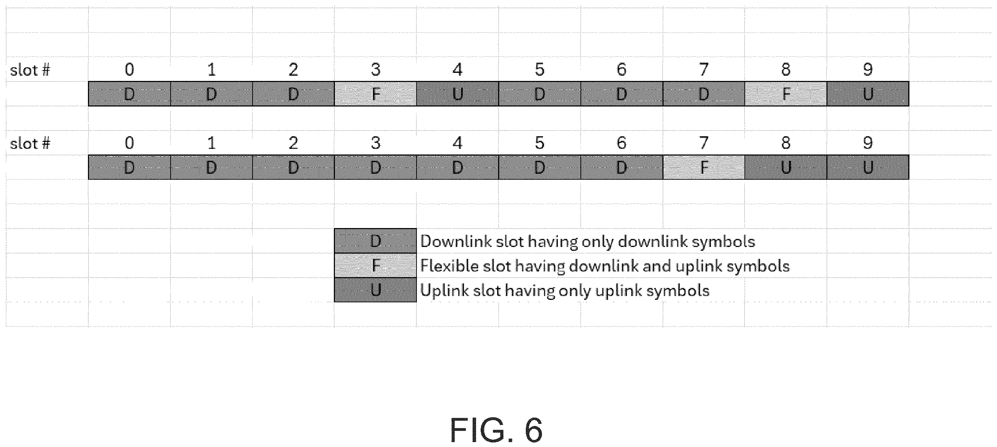

**FIG. 6** illustrates these typical 5G NR UL-DL TDD configurations.

That is also why indicated TCI state(s) can be selected only using DL DCIs (formats 1_1 or 1_2). However, in 6G the expectation is of more equal downlink and uplink data traffic, or at least the uplink portion is significantly increased compared to earlier generations. Then it becomes logical that also uplink DCI should be able to be used for the TCI state indication. UL DCIs do not carry a TCI field in 5G and this restricts the flexibility and efficiency of the beam switch/TCI state switch especially when it's expected that in 6G there would be higher allocation of UL slots in typical UL-DL configurations. The inventors realised that a problem to be solved is how to incorporate selection of indicated TCI state(s) into scheduling of uplink transmissions.

The inventors realized that another way of considering the technical problem is that in the current 5G standardization, only DCI formats 1_1 and 1_2 can be used for selecting new indicated TCI states. Moreover, in the unified TCI framework, the UE must follow the current TCI state(s) instead of SRI. This limits the performance in the UL transmission since UL DCIs are not considered to determine new indicated TCI states.

### SUMMARY

The present invention relates to UE-assisted beam management. In particular, it relates to unified / UL TCI state configuration based on SRS.

The inventors realized that currently, in 5G, only DCI formats 1_1 and 1_2 can be used for the selection of new indicated TCI states. Moreover, in the unified TCI framework, a UE must follow the current TCI state(s) instead of SRI. This limits the performance in the UL transmission, since UL DCIs are not considered for the determination of new indicated TCI states.

The present invention introduces a new UL DCI feature and processing requirement to enable UL specific TCI state configuration.

According to a first aspect of the present invention, there is provided an apparatus, comprising:
means for transmitting Sounding Reference Signal(s), SRS(s), to a base station;
means for receiving from the base station Sounding Reference Signal Indicator(s), SRI(s), in uplink control information, wherein the SRI(s) indicate a newly indicated Uplink Transmission Configuration Indication, UL TCI, state for subsequent UL transmissions;
means for transmitting to the base station a Physical Uplink Shared Channel, PUSCH, on the newly indicated UL TCI state indicated in a downlink Downlink Control Information, DL DCI; and
means for applying the newly indicated UL TCI state for subsequent UL transmissions based on the indicated SRI.

In an embodiment, in the receiving step, the SRI(s) refer to current activated TCI states.

In an embodiment, in the receiving step, the newly indicated TCI state(s) comprise(s) downlink reference signal(s), which are a quasi co-location, QCL, source for the Sounding Reference Signal (SRS) resource indicated by the SRI(s).

In an embodiment, in the PUSCH transmission step, after the PUSCH transmission on the newly indicated UL TCI state, the network is required to acknowledge the PUSCH transmission, hence confirming the TCI state update.

In an embodiment, the apparatus further comprises means for defining an application time for the newly indicated UL TCI state, which application time is configured to start with the first PUSCH transmission indicated by the DCI comprising the newly indicated UL TCI state.

In an embodiment, the apparatus is configured to update an application time after the network acknowledgement for rest of the transmission.

In an embodiment, the uplink control information is Uplink Downlink Control Information, UL DCI.

In an embodiment, the apparatus further comprises means for determining the Physical Uplink Shared Channel, PUSCH, transmission on the newly indicated UL TCI state as an acknowledgement, ACK, for the UL TCI state update, by the base station.

In an embodiment, the SRI(s) in the uplink control information is/are in UL DCI 0_1 or 0_2 format.

In an embodiment, the PUSCH transmissions are scheduled using DCI 0_0 format.

According to a second aspect of the present invention, there is provided an apparatus comprising at least one processor and at least one memory, said at least one memory stored with computer program code thereon, the at least one memory and the computer program code configured to, with the at least one processor, cause the apparatus at least to perform:
transmitting Sounding Reference Signal(s), SRS(s), to a base station;
receiving from the base station Sounding Reference Signal Indicator(s), SRI(s), in uplink control information, wherein the SRI(s) indicate a newly indicated Uplink Transmission Configuration Indication, UL TCI, state for subsequent UL transmissions;
transmitting to the base station a Physical Uplink Shared Channel, PUSCH, on the newly indicated UL TCI state indicated in a downlink Downlink Control Information, DL DCI; and
applying the newly indicated UL TCI state for subsequent UL transmissions based on the indicated SRI.

In an embodiment, in the receiving step, the SRI(s) refer to current activated TCI states.

In an embodiment, in the receiving step, the newly indicated TCI state(s) comprise(s) downlink reference signal(s), which are a quasi co-location, QCL, source for the Sounding Reference Signal (SRS) resource indicated by the SRI(s).

In an embodiment, in the PUSCH transmission step, after the PUSCH transmission on the newly indicated UL TCI state, the network is required to acknowledge the PUSCH transmission, hence confirming the TCI state update.

In an embodiment, the apparatus is further caused to perform defining an application time for the newly indicated UL TCI state, which application time is configured to start with the first PUSCH transmission indicated by the DCI comprising the newly indicated UL TCI state.

In an embodiment, the apparatus is configured to update an application time after the network acknowledgement for rest of the transmission.

In an embodiment, the uplink control information is Uplink Downlink Control Information, UL DCI.

In an embodiment, the apparatus is further caused to perform determining the Physical Uplink Shared Channel, PUSCH, transmission on the newly indicated UL TCI state as an acknowledgement, ACK, for the UL TCI state update, by the base station.

In an embodiment, the SRI(s) in the uplink control information is/are in UL DCI 0_1 or 0_2 format.

In an embodiment, the PUSCH transmissions are scheduled using DCI 0_0 format.

According to a third aspect of the present invention, there is a method, which comprises:
transmitting Sounding Reference Signal(s), SRS(s), from a User Equipment, UE, to a base station;
receiving in the UE from the base station Sounding Reference Signal Indicator(s), SRI(s), in uplink control information, wherein the SRI(s) indicate a newly indicated Uplink Transmission Configuration Indication, UL TCI, state for subsequent UL transmissions;
transmitting from the UE to the base station a Physical Uplink Shared Channel, PUSCH, on the newly indicated UL TCI state indicated in a downlink Downlink Control Information, DL DCI; and
applying, in the UE, the newly indicated UL TCI state for subsequent UL transmissions based on the indicated SRI.

According to a fourth aspect of the present invention, there is a computer program comprising instructions which, when executed by an apparatus, cause the apparatus to perform at least the following:
transmitting Sounding Reference Signal(s), SRS(s), from a User Equipment, UE, to a base station;
receiving in the UE from the base station Sounding Reference Signal Indicator(s), SRI(s), in uplink control information, wherein the SRI(s) indicate a newly indicated Uplink Transmission Configuration Indication, UL TCI, state for subsequent UL transmissions;
transmitting from the UE to the base station a Physical Uplink Shared Channel, PUSCH, on the newly indicated UL TCI state indicated in a downlink Downlink Control Information, DL DCI; and
applying, in the UE, the newly indicated UL TCI state for subsequent UL transmissions based on the indicated SRI.

According to a fifth aspect of the present invention, there is a computer program product, stored on a non-transitory memory medium, comprising computer program code, which when executed by at least one processor, causes an apparatus at least to perform:
transmitting Sounding Reference Signal(s), SRS(s), from a User Equipment, UE, to a base station;
receiving in the UE from the base station Sounding Reference Signal Indicator(s), SRI(s), in uplink control information, wherein the SRI(s) indicate a newly indicated Uplink Transmission Configuration Indication, UL TCI, state for subsequent UL transmissions;
transmitting from the UE to the base station a Physical Uplink Shared Channel, PUSCH, on the newly indicated UL TCI state indicated in a downlink Downlink Control Information, DL DCI; and
applying, in the UE, the newly indicated UL TCI state for subsequent UL transmissions based on the indicated SRI.

According to a sixth aspect of the present invention, there is provided an apparatus, comprising:
means for transmitting Sounding Reference Signal(s), SRS(s), to a base station;
means for receiving from the base station Sounding Reference Signal Indicator(s), SRI(s), in Uplink Downlink Control Information, UL DCI, wherein the SRI(s) indicate a newly indicated Uplink Transmission Configuration Indication, UL TCI, state for subsequent UL transmissions, wherein the UL DCI comprises an indication to determine whether the SRS indicated by the SRI or the downlink reference signals, DL RS, associated with the SRS is to be used as a new quasi co-location, QCL, source for uplink transmissions, the apparatus being further configured to determine the newly indicated UL TCI state based on the new QCL source;
means for transmitting to the base station a Physical Uplink Shared Channel, PUSCH, on the newly indicated UL TCI state indicated in a downlink Downlink Control Information, DL DCI; and
means for applying the newly indicated UL TCI state for subsequent UL transmissions based on the SRI and the indication.

In an embodiment, in the receiving step, the SRI(s) refer to current activated TCI states.

In an embodiment, in the receiving step, the newly indicated TCI state(s) comprise(s) downlink reference signal(s), which are a quasi co-location (QCL) source for the Sounding Reference Signal (SRS) resource indicated by the SRI(s).

In an embodiment, the UL DCI comprises an indication where a first value is an indication to the apparatus to determine a UL TCI state corresponding to the new QCL source and apply the UL TCI state as the newly indicated UL TCI state.

In an embodiment, the apparatus comprises means for determining, from a set of UL or DL TCI states, a TCI state corresponding to the new QCL source and applies the TCI state as a newly indicated TCI state.

In an embodiment, the UL DCI comprises an indication where a second value is an indication to the apparatus to not apply the SRS or the downlink reference signals, DL RS, indicated by the SRI as the newly indicated UL TCI state.

In an embodiment, in the PUSCH transmission step, after the PUSCH transmission on the newly indicated UL TCI state, the network is required to acknowledge the PUSCH transmission, hence confirming the TCI state update.

In an embodiment, the apparatus further comprises means for defining an application time for the newly indicated UL TCI state, which application time is configured to start with the first PUSCH transmission indicated by the DCI comprising the newly indicated UL TCI state.

In an embodiment, the apparatus is configured to update an application time after the network acknowledgement for rest of the transmission.

In an embodiment, the apparatus further comprises means for determining the Physical Uplink Shared Channel, PUSCH, transmission on the newly indicated UL TCI state as an acknowledgement, ACK, for the UL TCI state update, by the base station.

In an embodiment, the apparatus further comprises means for indicating, when an application time is expired, a TCI codepoint in the UL DCI associated with UL TCI states or DL TCI states or joint UL/DL TCI states based on the provided SRI(s), and when the indicated TCI codepoint of the UL DCI is associated with the UL TCI state, the apparatus is configured to apply the newly indicated UL TCI state for all configured UL reference signals and signals and channels after beam application time associated with the UL reference signals and signals and channels.

In an embodiment, the SRI(s) in the UL DCI is/are in UL DCI 0_1 or 0_2 format.

In an embodiment, the PUSCH transmissions are scheduled using DCI 0_0 format.

In an embodiment, an indicated TCI codepoint field of the uplink DCI overwrites already existing UL TCI codepoint fields provided by the DL DCI.

According to a seventh aspect of the present invention, there is provided an apparatus comprising at least one processor and at least one memory, said at least one memory stored with computer program code thereon, the at least one memory and the computer program code configured to, with the at least one processor, cause the apparatus at least to perform:
transmitting Sounding Reference Signal(s), SRS(s), to a base station;
receiving from the base station Sounding Reference Signal Indicator(s), SRI(s), in Uplink Downlink Control Information, UL DCI, wherein the SRI(s) indicate a newly indicated Uplink Transmission Configuration Indication, UL TCI, state for subsequent UL transmissions, wherein the UL DCI comprises an indication to determine whether the SRS indicated by the SRI or the downlink reference signals, DL RS, associated with the SRS is to be used as a new quasi co-location, QCL, source for uplink transmissions, the apparatus being further configured to determine the newly indicated UL TCI state based on the new QCL source;
transmitting to the base station a Physical Uplink Shared Channel, PUSCH, on the newly indicated UL TCI state indicated in a downlink Downlink Control Information, DL DCI; and
applying the newly indicated UL TCI state for subsequent UL transmissions based on the SRI and the indication.

In an embodiment, in the receiving step, the SRI(s) refer to current activated TCI states.

In an embodiment, in the receiving step, the newly indicated TCI state(s) comprise(s) downlink reference signal(s), which are a quasi co-location (QCL) source for the Sounding Reference Signal (SRS) resource indicated by the SRI(s).

In an embodiment, the UL DCI comprises an indication where a first value is an indication to the apparatus to determine a UL TCI state corresponding to the new QCL source and apply the UL TCI state as the newly indicated UL TCI state.

In an embodiment, the apparatus is further caused to perform determining, from a set of UL or DL TCI states, a TCI state corresponding to the new QCL source and applies the TCI state as a newly indicated TCI state.

In an embodiment, the UL DCI comprises an indication where a second value is an indication to the apparatus to not apply the SRS or the downlink reference signals, DL RS, indicated by the SRI as the newly indicated UL TCI state.

In an embodiment, in the PUSCH transmission step, after the PUSCH transmission on the newly indicated UL TCI state, the network is required to acknowledge the PUSCH transmission, hence confirming the TCI state update.

In an embodiment, the apparatus is further caused to perform defining an application time for the newly indicated UL TCI state, which application time is configured to start with the first PUSCH transmission indicated by the DCI comprising the newly indicated UL TCI state.

In an embodiment, the apparatus is configured to update an application time after the network acknowledgement for rest of the transmission.

In an embodiment, the apparatus is further caused to perform determining the Physical Uplink Shared Channel, PUSCH, transmission on the newly indicated UL TCI state as an acknowledgement, ACK, for the UL TCI state update, by the base station.

In an embodiment, the apparatus is further caused to perform indicating, when an application time is expired, a TCI codepoint in the UL DCI associated with UL TCI states or DL TCI states or joint UL/DL TCI states based on the provided SRI(s), and when the indicated TCI codepoint of the UL DCI is associated with the UL TCI state, the apparatus is configured to apply the newly indicated UL TCI state for all configured UL reference signals and signals and channels after beam application time associated with the UL reference signals and signals and channels.

In an embodiment, the SRI(s) in the UL DCI is/are in UL DCI 0_1 or 0_2 format.

In an embodiment, the PUSCH transmissions are scheduled using DCI 0_0 format.

In an embodiment, an indicated TCI codepoint field of the uplink DCI overwrites already existing UL TCI codepoint fields provided by the DL DCI.

According to an eighth aspect of the present invention, there is a method, which comprises:
transmitting Sounding Reference Signal(s), SRS(s), from a User Equipment, UE, to a base station;
receiving in the UE from the base station Sounding Reference Signal Indicator(s), SRI(s), in Uplink Downlink Control Information, UL DCI, wherein the SRI(s) indicate a newly indicated Uplink Transmission Configuration Indication, UL TCI, state for subsequent UL transmissions, wherein the UL DCI comprises an indication to determine whether the SRS indicated by the SRI or the downlink reference signals, DLRS, associated with the SRS is to be used as a new quasi co-location, QCL, source for uplink transmissions, the apparatus being further configured to determine the newly indicated UL TCI state based on the new QCL source;
transmitting from the UE to the base station a Physical Uplink Shared Channel, PUSCH, on the newly indicated UL TCI state indicated in a downlink Downlink Control Information, DL DCI; and
applying, in the UE, the newly indicated UL TCI state for subsequent UL transmissions based on the SRI and the indication.

According to a ninth aspect of the present invention, there is a computer program comprising instructions which, when executed by an apparatus, cause the apparatus to perform at least the following:
transmitting Sounding Reference Signal(s), SRS(s), from a User Equipment, UE, to a base station;
receiving received in the UE from the base station Sounding Reference Signal Indicator(s), SRI(s), in Uplink Downlink Control Information, UL DCI, wherein the SRI(s) indicate a newly indicated Uplink Transmission Configuration Indication, UL TCI, state for subsequent UL transmissions, wherein the UL DCI comprises an indication to determine whether the SRS indicated by the SRI or the downlink reference signals, DLRS, associated with the SRS is to be used as a new quasi co-location, QCL, source for uplink transmissions, the apparatus being further configured to determine the newly indicated UL TCI state based on the new QCL source;
transmitting from the UE to the base station a Physical Uplink Shared Channel, PUSCH, on the newly indicated UL TCI state indicated in a downlink Downlink Control Information, DL DCI; and
applying, in the UE, the newly indicated UL TCI state for subsequent UL transmissions based on the SRI and the indication.

According to a tenth aspect of the present invention, there is a computer program product, stored on a non-transitory memory medium, comprising computer program code, which when executed by at least one processor, causes an apparatus at least to perform:
transmitting Sounding Reference Signal(s), SRS(s), from a User Equipment, UE, to a base station;
receiving received in the UE from the base station Sounding Reference Signal Indicator(s), SRI(s), in Uplink Downlink Control Information, UL DCI, wherein the SRI(s) indicate a newly indicated Uplink Transmission Configuration Indication, UL TCI, state for subsequent UL transmissions, wherein the UL DCI comprises an indication to determine whether the SRS indicated by the SRI or the downlink reference signals, DLRS, associated with the SRS is to be used as a new quasi co-location, QCL, source for uplink transmissions, the apparatus being further configured to determine the newly indicated UL TCI state based on the new QCL source;
transmitting from the UE to the base station a Physical Uplink Shared Channel, PUSCH, on the newly indicated UL TCI state indicated in a downlink Downlink Control Information, DL DCI; and
applying, in the UE, the newly indicated UL TCI state for subsequent UL transmissions based on the SRI and the indication.

According to an eleventh aspect of the present invention, there is provided an apparatus, comprising:
means for transmitting Sounding Reference Signal(s), SRS(s), to a base station;
means for receiving from the base station Sounding Reference Signal Indicator(s), SRI(s), or an indication to apply downlink reference signal(s), DL RS(s), in Downlink Control Information, DCI, wherein the SRI(s) or the indication to apply DL RS(s) indicate a newly indicated Transmission Configuration Indication, TCI, state for subsequent UL transmissions, or subsequent DL transmissions, or subsequent both UL and DL transmissions;
means for transmitting to the base station a Physical Uplink Shared Channel, PUSCH, on the newly indicated TCI state indicated in the DCI;
means for defining an application time for the newly indicated TCI state, which application time is configured to start with the first PUSCH transmission indicated by the DCI comprising the newly indicated TCI state; and
means for applying the newly indicated TCI state for subsequent UL, or DL, or both UL and DL transmissions based on the indicated SRI or the indicated DL RS(s).

In an embodiment, in the receiving step, the SRI(s) refer to current activated TCI states.

In an embodiment, in the receiving step, the newly indicated TCI state(s) comprise(s) the downlink reference signal(s), which are a quasi co-location (QCL) source for the Sounding Reference Signal (SRS) resource indicated by the SRI(s).

In an embodiment, a UL DCI comprises an indication where a first value is an indication to the apparatus to determine a UL TCI state corresponding to a new QCL source and apply the UL TCI state as a newly indicated UL TCI state.

In an embodiment, the apparatus comprises means for determining, from a set of UL or DL TCI states, a TCI state corresponding to a new QCL source and applies the TCI state as the newly indicated TCI state.

In an embodiment, a UL DCI comprises an indication where a second value is an indication to the apparatus to not apply the SRS or the downlink reference signals, DL RS, indicated by the SRI as a newly indicated UL TCI state.

In an embodiment, in the PUSCH transmission step, after the PUSCH transmission on a newly indicated UL TCI state, the network is required to acknowledge the PUSCH transmission, hence confirming the TCI state update.

In an embodiment, in the defining step, the apparatus is configured to update the application time after the network acknowledgement for rest of the transmission.

In an embodiment, the apparatus further comprises means for determining the Physical Uplink Shared Channel, PUSCH, transmission on a newly indicated UL TCI state as an acknowledgement, ACK, for a UL TCI state update, by the base station.

In an embodiment, the apparatus further comprises means for indicating, when the application time is expired, a TCI codepoint in a UL DCI associated with UL TCI states or DL TCI states or joint UL/DL TCI states based on the provided SRI(s), and when the indicated TCI codepoint of the UL DCI is associated with the UL TCI state, the apparatus is configured to apply the newly indicated UL TCI state for all configured UL reference signals and signals and channels after beam application time associated with the UL reference signals and signals and channels.

In an embodiment, the SRI(s) in a UL DCI is/are in UL DCI 0_1 or 0_2 format.

In an embodiment, the PUSCH transmissions are scheduled using DCI 0_0 format.

In an embodiment, the apparatus comprises means for transmitting, after the applying step, on uplink at least one periodical transmission using the newly indicated TCI state.

In an embodiment, the apparatus further comprises:
means for determining that the newly indicated TCI state applies for downlink, and
means for monitoring a control resource set for one of a user specific search space or a common search space for reception of a DCI format by using the DL RS as a reference for a Physical Downlink Control Channel demodulation reference signal.

In an embodiment, an indicated TCI codepoint field of the uplink DCI overwrites already existing UL TCI codepoint fields provided by a DL DCI.

According to a twelfth aspect of the present invention, there is provided an apparatus comprising at least one processor and at least one memory, said at least one memory stored with computer program code thereon, the at least one memory and the computer program code configured to, with the at least one processor, cause the apparatus at least to perform:
transmitting Sounding Reference Signal(s), SRS(s), to a base station;
receiving from the base station Sounding Reference Signal Indicator(s), SRI(s), or an indication to apply downlink reference signal(s), DL RS(s), in Downlink Control Information, DCI, wherein the SRI(s) or the indication to apply DL RS(s) indicate a newly indicated Transmission Configuration Indication, TCI, state for subsequent UL transmissions, or subsequent DL transmissions, or subsequent both UL and DL transmissions;
transmitting to the base station a Physical Uplink Shared Channel, PUSCH, on the newly indicated TCI state indicated in the DCI;
defining an application time for the newly indicated TCI state, which application time is configured to start with the first PUSCH transmission indicated by the DCI comprising the newly indicated TCI state; and
applying the newly indicated TCI state for subsequent UL, or DL, or both UL and DL transmissions based on the indicated SRI or the indicated DL RS(s).

In an embodiment, in the receiving step, the SRI(s) refer to current activated TCI states.

In an embodiment, in the receiving step, the newly indicated TCI state(s) comprise(s) the downlink reference signal(s), which are a quasi co-location (QCL) source for the Sounding Reference Signal (SRS) resource indicated by the SRI(s).

In an embodiment, a UL DCI comprises an indication where a first value is an indication to the apparatus to determine a UL TCI state corresponding to a new QCL source and apply the UL TCI state as a newly indicated UL TCI state.

In an embodiment, the apparatus is further caused to perform determining, from a set of UL or DL TCI states, a TCI state corresponding to a new QCL source and applies the TCI state as the newly indicated TCI state.

In an embodiment, a UL DCI comprises an indication where a second value is an indication to the apparatus to not apply the SRS or the downlink reference signals, DL RS, indicated by the SRI as a newly indicated UL TCI state.

In an embodiment, in the PUSCH transmission step, after the PUSCH transmission on a newly indicated UL TCI state, the network is required to acknowledge the PUSCH transmission, hence confirming the TCI state update.

In an embodiment, in the defining step, the apparatus is configured to update the application time after the network acknowledgement for rest of the transmission.

In an embodiment, the apparatus is further caused to perform determining the Physical Uplink Shared Channel, PUSCH, transmission on a newly indicated UL TCI state as an acknowledgement, ACK, for a UL TCI state update, by the base station.

In an embodiment, the apparatus is further caused to perform indicating, when the application time is expired, a TCI codepoint in a UL DCI associated with UL TCI states or DL TCI states or joint UL/DL TCI states based on the provided SRI(s), and when the indicated TCI codepoint of the UL DCI is associated with the UL TCI state, the apparatus is configured to apply the newly indicated UL TCI state for all configured UL reference signals and signals and channels after beam application time associated with the UL reference signals and signals and channels.

In an embodiment, the SRI(s) in a UL DCI is/are in UL DCI 0_1 or 0_2 format.

In an embodiment, the PUSCH transmissions are scheduled using DCI 0_0 format.

In an embodiment, the apparatus is further caused to perform transmitting, after the applying step, on uplink at least one periodical transmission using the newly indicated TCI state.

In an embodiment, the apparatus is further caused to perform:
determining that the newly indicated TCI state applies for downlink, and
monitoring a control resource set for one of a user specific search space or a common search space for reception of a DCI format by using the DL RS as a reference for a Physical Downlink Control Channel demodulation reference signal.

In an embodiment, an indicated TCI codepoint field of the uplink DCI overwrites already existing UL TCI codepoint fields provided by a DL DCI.

According to a thirteenth aspect of the present invention, there is a method, which comprises:
transmitting Sounding Reference Signal(s), SRS(s), from a User Equipment, UE, to a base station;
receiving in the UE from the base station Sounding Reference Signal Indicator(s), SRI(s), or an indication to apply downlink reference signal(s), DL RS(s), in Downlink Control Information, DCI, wherein the SRI(s) or the indication to apply DL RS(s) indicate a newly indicated Transmission Configuration Indication, TCI, state for subsequent UL transmissions, or subsequent DL transmissions, or subsequent both UL and DL transmissions;
transmitting from the UE to the base station a Physical Uplink Shared Channel, PUSCH, on the newly indicated TCI state indicated in the DCI;
defining an application time in the UE for the newly indicated TCI state, which application time is configured to start with the first PUSCH transmission indicated by the DCI comprising the newly indicated TCI state; and
applying in the UE the newly indicated TCI state for subsequent UL, or DL, or both UL and DL transmissions based on the indicated SRI or the indicated DL RS(s).

According to a fourteenth aspect of the present invention, there is a computer program comprising instructions which, when executed by an apparatus, cause the apparatus to perform at least the following:
transmitting Sounding Reference Signal(s), SRS(s), from a User Equipment, UE, to a base station;
receiving in the UE from the base station Sounding Reference Signal Indicator(s), SRI(s), or an indication to apply downlink reference signal(s), DL RS(s), in Downlink Control Information, DCI, wherein the SRI(s) or the indication to apply DL RS(s) indicate a newly indicated Transmission Configuration Indication, TCI, state for subsequent UL transmissions, or subsequent DL transmissions, or subsequent both UL and DL transmissions;
transmitting from the UE to the base station a Physical Uplink Shared Channel, PUSCH, on the newly indicated TCI state indicated in the DCI;
defining an application time in the UE for the newly indicated TCI state, which application time is configured to start with the first PUSCH transmission indicated by the DCI comprising the newly indicated TCI state; and
applying in the UE the newly indicated TCI state for subsequent UL, or DL, or both UL and DL transmissions based on the indicated SRI or the indicated DL RS(s).

According to a fifteenth aspect of the present invention, there is a computer program product, stored on a non-transitory memory medium, comprising computer program code, which when executed by at least one processor, causes an apparatus at least to perform:
transmitting Sounding Reference Signal(s), SRS(s), from a User Equipment, UE, to a base station;
receiving in the UE from the base station Sounding Reference Signal Indicator(s), SRI(s), or an indication to apply downlink reference signal(s), DL RS(s), in Downlink Control Information, DCI, wherein the SRI(s) or the indication to apply DL RS(s) indicate a newly indicated Transmission Configuration Indication, TCI, state for subsequent UL transmissions, or subsequent DL transmissions, or subsequent both UL and DL transmissions;
transmitting from the UE to the base station a Physical Uplink Shared Channel, PUSCH, on the newly indicated TCI state indicated in the DCI;
defining an application time in the UE for the newly indicated TCI state, which application time is configured to start with the first PUSCH transmission indicated by the DCI comprising the newly indicated TCI state; and
applying in the UE the newly indicated TCI state for subsequent UL, or DL, or both UL and DL transmissions based on the indicated SRI or the indicated DL RS(s).

In various embodiments of the apparatus specified above, the apparatus may comprise at least one processor, and at least one memory storing instructions that, when executed by the at least one processor, cause the performance of the apparatus. In an embodiment, the apparatus is a UE.

### BRIEF DESCRIPTION OF THE DRAWINGS

**FIG. 1** illustrates a TCI framework for downlink and uplink to provide UE parameters to receive downlink signals and channels, and to transmit uplink signals and channels, respectively;
**FIG. 2** illustrates an indicated TCI state for downlink and uplink signals and channels;
**FIG. 3** illustrates an extension in Rel18 to have two indicated TCI states for DL and UL;
**FIG. 4** illustrates configuration, activation and indication steps for the TCI states;
**FIG. 5** illustrates codebook (a) and non-codebook-based (b) UL transmissions;
**FIG. 6** illustrates typical 5G NR UL-DL TDD configurations;
**FIG. 7** illustrates a sequence diagram between the UE and the 6G base station as an embodiment, representing a main signal chart in an embodiment of the present invention;
**FIG. 8a** illustrates an exemplary radio network scenario in accordance with at least some embodiments of the present invention; and
**FIG. 8b** illustrates a simplified block diagram of a network node according to an embodiment of the present invention.

### DETAILED DESCRIPTION

The following describes in further detail suitable apparatus and possible mechanisms carrying out User Equipment -assisted beam management. While the following focuses on 5G and/or 6G networks, the embodiments as described further below are by no means limited to be implemented in said networks only, but they are applicable in any network supporting the related beam management procedures.

A new UL DCI feature and processing requirement is proposed to enable UL specific TCI state configuration.

It is considered that SRS resources for the codebook-based PUSCH are not following an indicated TCI state but the SRS resources are each provided with an own UL TCI state (not an indicated TCI state). That is to facilitate multiple candidate UL TX beams for the PUSCH transmissions from which the 6gNB (i.e. the 6G base station) may select the most appropriate one(s).

An embodiment comprises the following steps, considering the User Equipment side.

At a first step, a UE transmits Sounding Reference Signal(s), SRS(s), to a base station.

At a second step, the UE receives from the base station Sounding Reference Signal Indicator(s), SRI(s), or an indication to apply downlink reference signal(s), DL RS(s), in Downlink Control Information, DCI, wherein the SRI(s) or the indication to apply DL RS(s) indicate a newly indicated Transmission Configuration Indication, TCI, state for subsequent UL transmissions, or subsequent DL transmissions, or subsequent both UL and DL transmissions.

At a third step, the UE transmits to the base station a Physical Uplink Shared Channel, PUSCH, on the newly indicated TCI state indicated in the DCI.

At a fourth step, the UE defines an application time for the newly indicated TCI state, which application time is configured to start with the first PUSCH transmission indicated by the DCI comprising the newly indicated TCI state.

At a fifth step, the UE applies the newly indicated TCI state for subsequent UL, or DL, or both UL and DL transmissions based on the indicated SRI or the indicated DL RS(s).

The above steps form an embodiment involving the apparatus which in this case is a UE. Furthermore, the embodiments also relate to other aspects, for example a respective method, computer program, and computer program product. On the other hand, certain steps are initiated by the base station, so an aspect is a telecommunication system (or connection) involving a base station and a UE. Embodiments relate to various different telecommunication technologies, such as 5G and 6G, for instance.

Regarding the second step above, in a further embodiment, the SRI(s) is/are provided in the UL DCI (e.g. in format 0_1 or format 0_2) and it/they indicate(s) a new "indicated UL TCI state" for the subsequent UL transmissions. In a further embodiment, the SRI(s) refer to current activated TCI states. In a yet further embodiment, the new indicated TCI state(s) comprise(s) downlink reference signal(s), which are a quasi co-location (QCL) source for the Sounding Reference Signal (SRS) resource indicated by the SRI(s).

In an embodiment, regarding the PUSCH transmission step (i.e. the third step) above, after the PUSCH transmission on the new UL TCI state, the network may be set to acknowledge the PUSCH transmission, hence confirming the TCI state update. The acknowledgement may be given by the base station, or by some other network element, in various embodiments. Furthermore, in an embodiment and in the defining step (i.e. the fourth step), the UE is configured to update the application time after the acknowledgement initiated by the network element (such as the BS, for instance) for rest of the transmission.

In an embodiment, the system further determines the Physical Uplink Shared Channel, PUSCH, transmission on the new indicated UL TCI state as an acknowledgement (ACK) for the TCI state update, and this acknowledgement is made by the base station. Hence, this feature introduces the ACK given by the base station.

In an embodiment, if an ACK is given during the application time, the UE further indicates a TCI codepoint in the uplink control information associated with UL TCI states or DL TCI states or joint UL/DL TCI states based on the provided SRI(s).

Furthermore, in an embodiment, the SRI(s) in the uplink control information is/are in the UL DCI 0_1 or 0_2 format.

Furthermore, in an embodiment, the PUSCH transmissions are scheduled using DCI 0_0 format.

Further characteristics of various embodiments are discussed next. In an embodiment, the SRI(s) given in the DCI format (e.g. in 0_1 or 0_2 format, which are the DCI formats scheduling the UL transmission) when scheduling uplink PUSCH transmission(s) would indicate the new indicated UL TCI state. The new indicated UL TCI state is then used by the subsequent PUCCH transmissions, and the PUSCH transmissions are scheduled using DCI format 0_0, for instance. Uplink reference signal (RS) transmissions are thus configured or predefined to follow the indicated UL TCI state. Furthermore, configured grant PUSCH transmissions are configured or predefined to follow the indicated UL TCI state, too.

In an embodiment, scheduled PUSCH transmission(s) is/are transmitted according to the provided SRI(s) in the DCI. In an option, SRI(s) refer(s) to currently activated TCI state(s). In another option, new indicated TCI state(s) is/are the one(s) comprising the downlink reference signal(s) being a quasi co-location (QCL) source for the SRS resource indicated by the SRI(s).

In an embodiment, the scheduled PUSCH transmission(s) act(s) as an acknowledgement for the indicated UL TCI state update.

In an embodiment, the application time for the update of the indicated UL TCI state starts from the transmission of (a first) PUSCH transmission(s) scheduled by the DCI indicating the new UL TCI state. Furthermore, there is an application time (either configured, predefined or defined by the UE capability) after which the new updated UL TCI state comes into effect for the aforementioned signals and channels.

In one exemplary embodiment, the UL DCI format may comprise an indication (such as a bitfield), wherein the indication set to a first value (e.g. to value 1) may indicate that the SRS indicated by the SRI or the DL RS associated with the SRS, is used as a new QCL source for the UL transmission, and the UE further determines the new indicated UL TCI state based on the new QCL source. Furthermore, the UE determines, from the set of TCI states (for UL or for DL), the TCI state ID corresponding to the new QCL source and applies it as a new indicated TCI state. If the UL DCI format comprises an indication set to a second value (e.g. to value 0), it may indicate that the UE does not apply the SRS/DLRS (downlink reference signals) indicated by the SRI as a new indicated TCI state (i.e. no TCI update is provided by the DCI). In other words, there may be an additional information element in the DCI that indicates whether or not the update of the indicated TCI state is applied.

In one embodiment, the uplink DCI with grant provides an indication of a TCI codepoint field, which includes one or more codepoints, which can be associated with UL or joint UL/DL or DL-TCI states. When the indicated TCI codepoint field of the uplink DCI is associated with the UL TCI state, the UE shall apply the indicated UL TCI for all configured UL RSs/signals/channels after the beam application time associated with UL RSs/signals/channels. It is to be noted that the UE shall assume that the indicated TCI codepoint field of the uplink DCI overwrites already existing UL TCI codepoint fields provided by the DL DCI, e.g. in DCI 1_1 or 1_2 formats.

In an embodiment, the UE receives DCI comprising information scheduling an uplink transmission, and the UE determines presence of at least one indication, where the indication relates to applying SRS/DL RS (the spatial relation) associated with the indication as a new transmission configuration indication state for at least one of UL and/or DL. Thereafter, the UE starts a beam application timer, and upon determining that the beam application time has passed or the timer has expired, applying for the transmission or reception of at least one UL or DL channel according to one of the SRS resources indicated via the SRI or the DL RS in the updated (i.e. newly) indicated TCI state. This means that the UE is transmitting on uplink at least one periodical transmission using the new transmission configuration indication (TCI) state. Furthermore, this may mean that the UE determines that the indication applies for downlink, and the UE monitors the control resource set (i.e. CORESET) for one of USS (user specific search space) or CSS (common search space) for reception of a DCI format by using the DL RS as a reference for the PDCCH demodulation reference signal (i.e. DMRS). In this embodiment, such determining may be based on the TCI state type, whether it is a downlink TCI or an uplink TCU or a joint "downlink and uplink" TCI state. On the other hand, such determining may be based on an explicit indication in the downlink control information (i.e. DCI).

Now proceeding to an embodiment of the present invention, the following process determines steps in view of the UE (or executed by the UE) in an exemplary set of method steps. This process example represents one manner of implementation for the present invention.

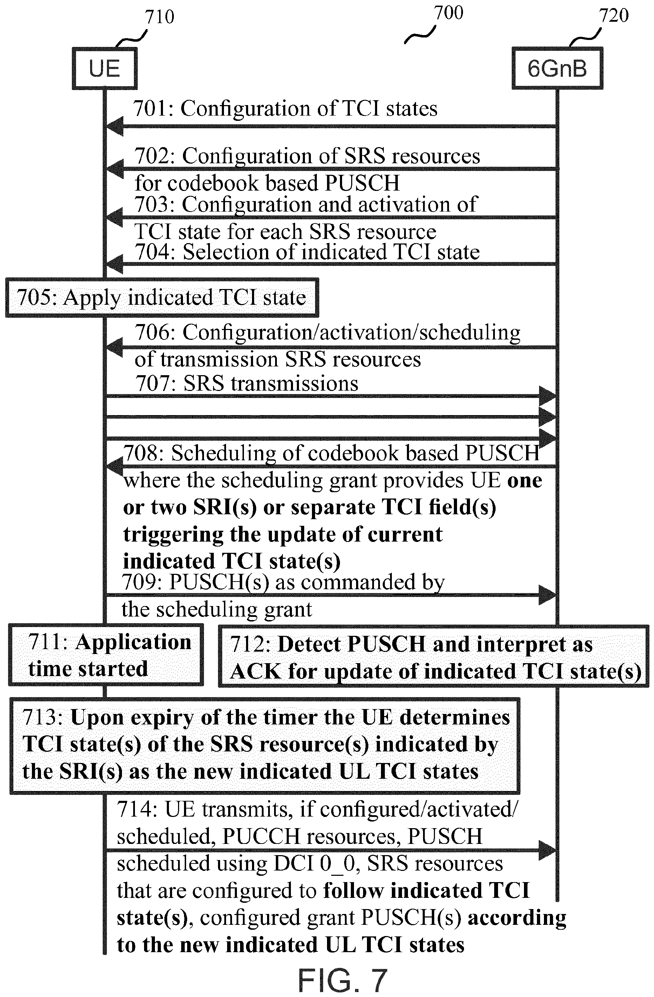

The corresponding sequence diagram 700 between the UE and the 6gNB (i.e. the 6G base station) is presented in **FIG. 7****.** The presented sequence of steps involves two apparatuses, namely the UE 710 and the base station ("6GnB") 720. The order numbers of the steps are made especially according to the point of view of the UE 710.

At a first step, the UE 710 is configured 701 with multiple TCI states, wherein the configuration is provided by the base station.

At a second step, the UE 710 is configured 702 with multiple SRS resources for the codebook-based PUSCH. The configuration information is given (initiated) by the base station.

At a third step, the UE 710 is provided 703 (e.g. by using MAC activation) with a TCI state for each SRS resource of the SRS resource set. This configuration (activation) is made by the base station 720 towards the UE 710.

At a fourth step, the UE 710 is indicated 704 with one TCI state as current indicated UL TCI state. In other words, this is the same as a selection of a current indicated UL TCI state, made by the base station 720 and provided to the UE 710. After these four steps, the UE 710 applies 705 the indicated TCI state.

At a fifth step, the UE 710 is configured or activated or scheduled 706 to transmit SRS resources of the SRS resource set. This "triggering" is made by the base station 720 towards the UE 710. In response to this trigger signal, the UE 710 performs 707 the actual SRS transmissions.

At a sixth step, the UE 710 is scheduled 708 with a codebook-based PUSCH, where the scheduling grant provides the UE 710 one or two SRI(s) or separate TCI field(s) triggering the update of current indicated TCI state(s).

At a seventh step, the UE 710 transmits 709 PUSCH(s) as commanded by the scheduling grant.

At an eighth step, the UE 710 starts 711 an "application time" timer for the new indicated UL TCI state(s). In parallel in the base station 720 side, the base station 720 detects 712 the PUSCH(s) and interprets it/them as an acknowledgement for update of indicated TCI state(s).

At a ninth step, upon expiry of the timer, the UE 710 determines 713 TCI state(s) of the SRS resource(s) indicated by the SRI(s) as the new indicated UL TCI states.

Finally, at a tenth step, the UE 710 transmits 714, if configured or activated or scheduled, the PUCCH resources, the PUSCH scheduled using the DCI 0_0 format, the SRS resources that are configured to follow the indicated TCI state(s), and configured grant PUSCH(s) according to the new indicated UL TCI states.

It is stressed that the sequence diagram of FIG. 7 describes only one possible embodiment within the concept of the present invention. While 6G base station is especially mentioned, other embodiments may well be applied in other telecommunication technologies, such as 5G, i.e. applying a 5G base station and a respective UE.

In another embodiment of the present invention, the applied steps include steps 707, 708, 709, 711 and 714 as claimed and as disclosed in the summary. The technical effects and the advantages of this embodiment are mentioned later in the detailed description.

In an embodiment of the present invention, the above discussed User Equipment 710 is a smartphone.

In a more general fashion, certain apparatus and network arrangements are disclosed next, and the present invention is applicable in these various telecommunication connection arrangements.

FIG:s 8a and 8b illustrate an example of a wireless telecommunication network implementation and an apparatus as part of the exemplary telecommunication network implementation.

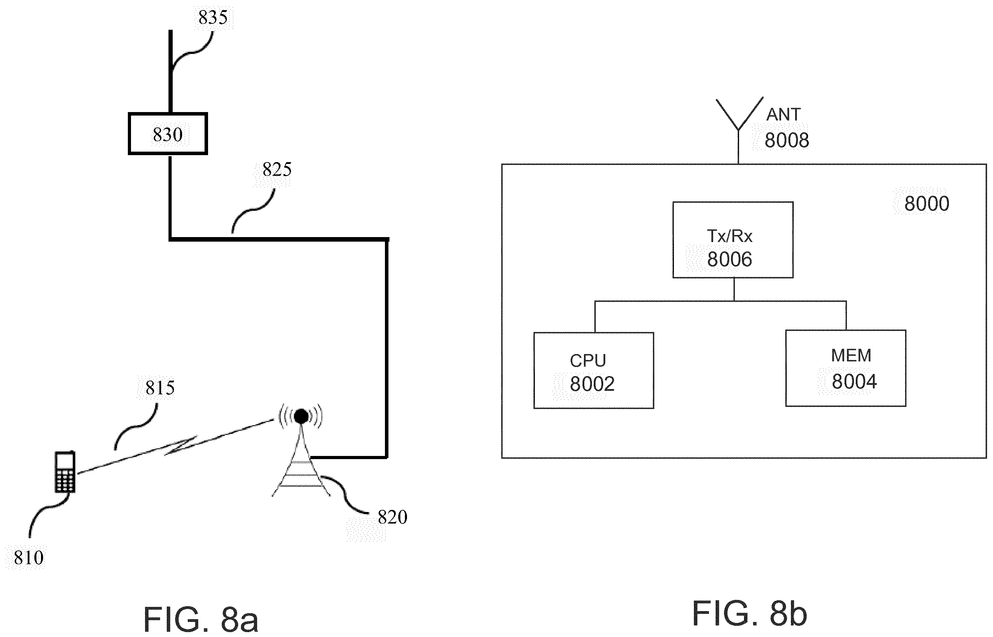

**FIG. 8a** illustrates an exemplary radio network scenario in accordance with at least some embodiments of the present invention.

FIG. 8a illustrates an exemplary radio network scenario in accordance with at least some embodiments of the present invention. According to the example scenario of FIG. 8a, there may be a wireless communication network, which comprises User Equipment, UE 810, an access node, such as a Base Station, BS, 820, and core network element 830.

The present invention focuses on the UE 810 side of a wireless telecommunication connection, and FIG. 8a presents an example of an uplink and a downlink connection, i.e. the UE 810 transmits, and the base station 820 receives, or vice versa. In this example, some of the actions are performed in the UE 810, and some other actions are performed in the base station 820, and the communication principle between these two entities is shown e.g. in FIG. 7.

The configuration of FIG. 8a presents merely a single example of many possible apparatuses within many possible wireless communication systems. Thus, the present invention is not restricted solely to apparatus, connection type/direction and system examples of FIG:s 8a and 8b.

Back to FIG. 8a, UE 810 may comprise, for example, a smartphone, a cellular phone, a Machine-to-Machine (M2M) node, Machine-Type Communications (MTC) node, an Internet of Things (IoT) node, a car, a car telemetry unit, a laptop computer, a tablet computer or another kind of suitable UE or mobile station. Generally, UE refers to any end device that may be capable of wireless communication. It can be either a mobile device or a stationary device. By way of example rather than limitation, a UE may also be referred to as a communication device, a terminal device, a Subscriber Station (SS), a Portable Subscriber Station, a Mobile Station (MS), or an Access Terminal (AT). In the example system of FIG. 8a, UE 810 may communicate wirelessly with BS 820, or with a cell of BS 820, via air interface 815. In some example embodiments, BS 820 may be considered as a serving BS, for UE 810. UE 810 may also communicate simultaneously with more than one BS 820 and/or more than one cell of BS 820.

BS 820 may be connected, directly or via at least one intermediate node, with core network 830 via interface 825. Core network 830 may be, in turn, coupled via interface 835 with another network (not shown in FIG. 8a), via whichever connectivity to further networks may be obtained, for example via a worldwide interconnection network. BS 820 may be connected with one or multiple other BS as well via an inter-base station interface (not shown in FIG. 8a).

UE 810 may be connected to BS 820 via air interface 815. Air interface 815 between UE 810 and BS 820 may be configured in accordance with a Radio Access Technology, RAT, which UE 810 and BS 820 are configured to support. Examples of cellular RATs include Long Term Evolution (LTE), New Radio (NR), which may also be known as fifth generation (5G) radio access technology. For example, in the context of LTE, BS 820 may be referred to as an eNB while in the context of NR, BS 820 may be referred to as a gNB. In any case, example embodiments are not restricted to any particular radio technology. Instead, example embodiments may be exploited in any wireless communication network (which may be a cellular or a non-cellular technology) operating in accordance to 3GPP standard, IEEE standard (such as for example IEEE 802.11 based local area networks), or it can be some other radio technology, wherein it is desirable to achieve an improved transmission and/or reception performance between an access node such as a BS, and a UE, and in particular, an improved MIMO performance.

Ever increasing data throughput requirements in wireless communication networks requires usage of wide frequency spectrum. Thus, for example, frequency bands for 5G (also referred to as NR) are currently separated into different frequency ranges. Frequency Range 1 (FR1) includes sub-6 GHz frequency bands, some of which are frequency bands traditionally used by previous standards, but the range has been extended to cover potential new spectrum offerings up to 7125 MHz. Another range is Frequency Range 2 (FR2) that at the moment includes frequency bands from 24.25 GHz to 52.6 GHz. Frequencies of this range and above are referred to as mmWave frequencies. MmWave frequency ranges are attractive because of higher available bandwidth than frequency bands in the FR1, which helps to offer data rates that satisfy 5G demands.

The described embodiments can be particularly beneficial for mmWave frequencies, including FR2 ranges, but can be applied equally to FR1 or any other frequencies. As said earlier, although applicable to any wireless networks, the 5G is mainly focused in the discussed examples, for the sake of simplicity. 5G has been envisaged to use more base stations or nodes than the current network deployments of LTE (a so-called small cell concept), including macro sites operating in cooperation with smaller local area access nodes and perhaps also employing a variety of radio technologies for better coverage and enhanced data rates. 5G will likely be comprised of more than one radio access technology / radio access network (RAT/RAN), each optimized for certain use cases and/or spectrum. 5G mobile communications may have a wider range of use cases and related applications including video streaming, augmented reality, different ways of data sharing and various forms of machine type applications, including vehicular safety, different sensors and real-time control.

MIMO is one of the key enabling techniques for 5G wireless technology. The underlying principle of MIMO is to use multiple transmit and receive antennas to increase throughput and/or reliability of data transmission. Increased throughput can be achieved by transmitting/receiving different data streams over multiple antennas, while increased reliability can be achieved by using multiple antennas for transmitting/receiving multiple versions of the same data.

Beamforming antenna arrays play an important role in 5G implementations. Although offering high bandwidth, mmWave frequencies have higher propagation losses that greatly vary depending on the environment. Smaller wavelength at higher carrier frequencies allows smaller antenna element sizes which gives an opportunity to place one or more (for example, two, three or more) relatively large antenna arrays at a UE. This in turn leads to various challenges to maintain the expected performance.

Considering as a non-limiting example 2x2 MIMO, downlink (DL) MIMO performance (for example, in mmWave frequency ranges, such as FR2) may be achieved by using polarization split (co-polar and cross-polar) of a dual feed antenna array at a base station (referred to also as a gNB) and/or at a UE, where each polarization corresponds to one MIMO branch. The reasoning behind this approach is to achieve high and similar antenna gain performance in both MIMO channels, while maintaining a compact spatial antenna design.

When designing dual-polarized antenna arrays, it is important to achieve high Cross Polarization Discrimination (XPD). XPD may be defined as a ratio of the co-polar component of the specified polarization and the orthogonal cross-polar component over a sector or beamwidth angle.

De-correlation at an antenna array may be obtained by ensuring that each antenna feed corresponds to a single polarization and that the resulting dual feed polarizations are designed to be orthogonal. This way, an antenna array with high XPD at the feed points may be designed. This approach will ensure full utilization of two MIMO channels for Line of Sight (LoS) and/or Non-Line of Sight (NLoS) operation provided that the maximum gain direction and the orientation of the orthogonal polarizations are aligned between antenna arrays at the UE and at the gNB.

In addition, high antenna gain requirements for mmWave (e.g. FR2) frequencies will reduce its radiation beam width, whereby beam steering at an antenna array (or arrays) is required to cover the needed angular space. The beam steering capabilities may be implemented using tunable phase shifters at each element in the antenna array, whereby the direction of the beam can be controlled electrically (phased array) instead of mechanical control.

The XPD of any antenna (or antenna array) depends on its radiation pattern and may change dynamically as a function of the Angle of Departure (AoD) and/or Angle of Arrival (AoA). This dependency increases as the variations in the radiation pattern change and as the radiation patterns change electrically. Higher antenna gain pattern leads to larger XPD variations over the angular space. Phase controlled arrays also have increased XPD variations over the angular space.

As such, the physical orientation of antennas at mmWave frequencies will affect MIMO throughput much more than what is seen at Sub-6 GHz frequencies, where the decorrelation at the UE is achieved by physical separation between two receiving antennas (each with random and different radiation pattern). Instead, the mmWave architecture may utilize dual orthogonally polarized antennas (or antenna arrays), designed for equal high gain radiation patterns.

**FIG. 8b** illustrates a simplified block diagram of a network node according to an embodiment of the present invention.

FIG. 8b illustrates an example of an apparatus 8000 for wireless communications which apparatus involves a transmitter and a receiver (i.e. a transceiver 8006). The apparatus 8000 may be a base station 820 in this example. In the following sections, the apparatus 8000 is also called as a network node. In another embodiment, the apparatus 8000 may be a UE 810 because the main structural parts are the same between the UE 810 and the base station 820. However, in the following, the functionalities in view of the base station 820 are mainly discussed.

Such apparatuses may comprise e.g. the functional units disclosed in FIG. 8b showing a simplified block diagram of a network node, i.e. the apparatus, according to the aspects and the related embodiments.

The network node 8000 of FIG. 8b may be a base station, an access point, an access node, a gNB, an evolved NodeB (eNB), a server, a host, or any other network entity that may communicate with the UE 810.

The apparatus 8000 may include at least one processor or control unit or module 8002 (marked as CPU). At least one memory 8004 may be provided in the apparatus. The memory 8004 may include computer program instructions or computer code contained therein. One or more transceivers 8006 may be provided, and the apparatus may also include an antenna 8008. Although only one antenna is shown, many antennas and multiple antenna elements may be provided in the apparatus. Other configurations of the apparatus, for example, may be provided. For example, in addition to wireless communication, the network node may be additionally configured for wired communication with the UE, and in such a case antenna 8008 may illustrate any form of communication hardware, without being limited to merely an antenna.

Transceiver 8006 may be a transmitter, a receiver, or both a transmitter and a receiver, or a unit or device that may be configured both for transmission and reception. The transmitter and/or receiver (as far as radio parts are concerned) may also be implemented as a remote radio head which is not located in the device itself, but in a mast, for example. The operations and functionalities may be performed in different entities, such as nodes, hosts or servers, in a flexible manner. In other words, division of labor may vary case by case. One possible use is to make a network node deliver local content. One or more functionalities may also be implemented as virtual application(s) in software that can run on a server.

In certain embodiments, the apparatus 8000 may comprise at least one processor 8002 and at least one memory 8004 including computer program code. The at least one memory 8004 including computer program code can be configured to, with the at least one processor 8002, cause the apparatus 8000 at least to perform any of the processes described herein.

Processors 8002 may be embodied by any computational or data processing device, such as a central processing unit (CPU), digital signal processor (DSP), application specific integrated circuit (ASIC), programmable logic devices (PLDs), field programmable gate arrays (FPGAs), digitally enhanced circuits, or comparable device or a combination thereof. The processors 8002 may be implemented as a single controller, or a plurality of controllers or processors.

For firmware or software, the implementation may include modules or unit of at least one chip set (for example, procedures, functions, and so on). The at least one memory 8004 may independently be any suitable storage device, such as a non-transitory computer-readable medium. The term "non-transitory," as used herein, is a limitation of the medium itself (i.e., tangible, not a signal) as opposed to a limitation on data storage persistency (e.g., RAM vs. ROM). A hard disk drive (HDD), random access memory (RAM), flash memory, or other suitable memory may be used. The memory 8004 may be combined on a single integrated circuit as the processor 8002, or it may be separate therefrom. Furthermore, the computer program instructions may be stored in the memory 8004 and which may be processed by the processors 8002 can be any suitable form of computer program code, for example, a compiled or interpreted computer program written in any suitable programming language. The memory 8004 or data storage entity is typically internal but it may also be external or a combination thereof, such as in the case when additional memory capacity is obtained from a service provider. The memory 8004 may be fixed or removable.

The memory 8004 and the computer program instructions may be configured, with the processor 8002 for the particular device, to cause a hardware apparatus such as network node 8000, to perform any of the processes described above. Therefore, in certain embodiments, a non-transitory computer-readable medium may be encoded with instructions or one or more computer program (such as added or updated software routine, applet or macro) that, when executed in hardware, may perform a process such as one of the processes described herein. In other embodiments, a computer program product may encode instructions for performing any of the processes described above, or a computer program product embodied in a non-transitory computer-readable medium and encoding instructions that, when executed in hardware, perform any of the processes describes above. Computer programs may be coded by a programming language, which may be a high-level programming language, such as objective-C, C, C++, C#, Java, etc., or a low-level programming language, such as a machine language, or assembler. Alternatively, certain embodiments may be performed entirely in hardware.

Although the network element example in FIG. 8b discusses a base station 820, the respective main elements are also part of a UE 810, as a counterpart in a connection for the BS 820. Thus, the general structural elements above and the applicability of the above-mentioned process steps via a computer program are also present in the UE 810 side.

The technical effects and the advantages of the present invention include the following.

The present invention enhances and makes the unified TCI framework more complete by enabling UL grant(s) to update indicated TCI state(s). Furthermore, it provides efficient, low latency and low overhead (i.e. no need to use downlink grant) in uplink heavy or in balanced DL and UL scenarios (like in 6G) for the update of the indicated TCI state(s). Furthermore, the present invention enables a more flexible UL transmission configuration for higher efficiency and performance. Also, the present invention tackles the contradiction on the unified TCI state overwriting the SRI(s) in the current 5G standardization.

The foregoing description has provided by way of exemplary and non-limiting examples a full and informative description of the exemplary embodiments of the present invention. However, various modifications and adaptations may become apparent to those skilled in the relevant arts in view of the foregoing description, when read in conjunction with the accompanying drawings and the appended examples. However, all such and similar modifications of the teachings of the present invention will still fall within the scope of the present invention, where the scope is defined by the claims.

### Abbreviations:

- CSS: Common Search Space
- DCI: Downlink Control Information
- DL: Downlink
- MIMO: Multiple Input Multiple Output
- NR: New Radio
- PUCCH: Physical Uplink Control Channel
- PUSCH: Physical Uplink Shared Channel
- RS: Reference Signal
- SRI: SRS indicator
- SRS: Sounding Reference Signal
- TCI: Transmission Configuration Indication
- UE: User Equipment
- UL: Uplink
- USS: User Specific Search Space

## Claims

1. An apparatus, comprising:
means for transmitting (707) Sounding Reference Signal(s), SRS(s), to a base station;
means for receiving (708) from the base station Sounding Reference Signal Resource Indicator(s), SRI(s), or an indication to use downlink reference signal(s), DL RS(s), in Downlink Control Information, DCI, wherein the SRI(s) or the indication to use DL RS(s) indicate a newly indicated Transmission Configuration Indication, TCI, state for subsequent UL transmissions, or subsequent DL transmissions, or subsequent both UL and DL transmissions;
means for transmitting (709) to the base station a Physical Uplink Shared Channel, PUSCH, using the newly indicated TCI state indicated in the DCI;
means for defining (711) an application time for the newly indicated TCI state, which application time is configured to start with the transmitted PUSCH indicated by the DCI comprising the newly indicated TCI state;
means for applying (714) the newly indicated TCI state for subsequent UL, or DL, or both UL and DL transmissions based on the indicated SRI or the indicated DL RS(s); and
means for indicating, when the application time is expired, a TCI codepoint in a received UL DCI associated with UL TCI states or DL TCI states or joint UL/DL TCI states based on the provided SRI(s), and when the indicated TCI codepoint of the UL DCI is associated with a UL TCI state, the apparatus is configured to apply a newly indicated UL TCI state for all configured UL reference signals and signals and channels after a beam application time associated with the UL reference signals and signals and channels.

2. The apparatus according to claim 1, wherein in the means for receiving, the SRI(s) refer to current activated TCI states.

3. The apparatus according to claim 1 or claim 2, wherein in the means for receiving, the newly indicated TCI state(s) comprise(s) the downlink reference signal(s), which are a quasi co-location (QCL) source for the Sounding Reference Signal (SRS) resource indicated by the SRI(s).

4. The apparatus according to any of claims 1-3, wherein the UL DCI comprises an indication where a first value is an indication to the apparatus to determine a UL TCI state corresponding to a new QCL source and apply the UL TCI state as a newly indicated UL TCI state.

5. The apparatus according to any of claims 1-4, wherein the apparatus comprises means for determining, from a set of UL or DL TCI states, a TCI state corresponding to a new QCL source and applies the TCI state as the newly indicated TCI state.

6. The apparatus according to any of claims 1-5, wherein a UL DCI comprises an indication where a second value is an indication to the apparatus to not use the SRS or the downlink reference signals, DL RS, indicated by the SRI as a newly indicated UL TCI state.

7. The apparatus according to any of claims 1-6, wherein the apparatus is configured to receive acknowledgement of the PUSCH transmission from the network on the newly indicated TCI state indicated in the DCI, hence confirming the TCI state update.

8. The apparatus according to claim 7, wherein after the means for defining, the apparatus is configured to update the application time after the network acknowledgement for the rest of the transmissions.

9. The apparatus according to any of claims 1-7, wherein the apparatus further comprises means for determining a Physical Uplink Shared Channel, PUSCH, transmission on a newly indicated UL TCI state as an acknowledgement, ACK, for a UL TCI state update, the acknowledgement received from the base station.

10. The apparatus according to any of claims 1-9, wherein SRI(s) in a UL DCI is/are in UL DCI 0_1 or 0_2 format.

11. The apparatus according to any of claims 1-10, wherein after the means for applying, the apparatus comprises means for transmitting on uplink at least one periodical transmission using the newly indicated TCI state.

12. The apparatus according to any of claims 1-11, wherein the apparatus further comprises:
means for determining that the newly indicated TCI state applies for downlink, and
means for monitoring a control resource set for one of a user specific search space or a common search space for reception of a DCI format by using a DL RS as a reference for a Physical Downlink Control Channel demodulation reference signal.

13. The apparatus according to claim 1, wherein an indicated TCI codepoint field of the uplink DCI overwrites already existing UL TCI codepoint fields provided by a DL DCI.

14. A method, comprising:
transmitting (707) Sounding Reference Signal(s), SRS(s), from a User Equipment, UE, to a base station;
receiving (708) in the UE from the base station Sounding Reference Signal Resource Indicator(s), SRI(s), or an indication to use downlink reference signal(s), DL RS(s), in Downlink Control Information, DCI, wherein the SRI(s) or the indication to use DL RS(s) indicate a newly indicated Transmission Configuration Indication, TCI, state for subsequent UL transmissions, or subsequent DL transmissions, or subsequent both UL and DL transmissions;
transmitting (709) from the UE to the base station a Physical Uplink Shared Channel, PUSCH, using the newly indicated TCI state indicated in the DCI;
defining (711) an application time in the UE for the newly indicated TCI state, which application time is configured to start with the transmitted PUSCH indicated by the DCI comprising the newly indicated TCI state;
applying (714) in the UE the newly indicated TCI state for subsequent UL, or DL, or both UL and DL transmissions based on the indicated SRI or the indicated DL RS(s); and
indicating, when the application time is expired, a TCI codepoint in a UL DCI associated with UL TCI states or DL TCI states or joint UL/DL TCI states based on the provided SRI(s), and when the indicated TCI codepoint of the UL DCI is associated with the UL TCI state, applying the newly indicated UL TCI state for all configured UL reference signals and signals and channels after beam application time associated with the UL reference signals and signals and channels.

15. A computer program comprising instructions which, when executed by an apparatus, cause the apparatus to perform at least the following:
transmitting (707) Sounding Reference Signal(s), SRS(s), from a User Equipment, UE, to a base station;
receiving (708) in the UE from the base station Sounding Reference Signal Resource Indicator(s), SRI(s), or an indication to use downlink reference signal(s), DL RS(s), in Downlink Control Information, DCI, wherein the SRI(s) or the indication to use DL RS(s) indicate a newly indicated Transmission Configuration Indication, TCI, state for subsequent UL transmissions, or subsequent DL transmissions, or subsequent both UL and DL transmissions;
transmitting (709) from the UE to the base station a Physical Uplink Shared Channel, PUSCH, using the newly indicated TCI state indicated in the DCI;
defining (711) an application time in the UE for the newly indicated TCI state, which application time is configured to start with the transmitted PUSCH indicated by the DCI comprising the newly indicated TCI state;
applying (714) in the UE the newly indicated TCI state for subsequent UL, or DL, or both UL and DL transmissions based on the indicated SRI or the indicated DL RS(s); and
indicating, when the application time is expired, a TCI codepoint in a UL DCI associated with UL TCI states or DL TCI states or joint UL/DL TCI states based on the provided SRI(s), and when the indicated TCI codepoint of the UL DCI is associated with the UL TCI state, applying the newly indicated UL TCI state for all configured UL reference signals and signals and channels after beam application time associated with the UL reference signals and signals and channels.
